# EUROPÄISCHE PATENTSCHRIFT

(11) **EP 1 173 883 B1**
(45) Veröffentlichungstag und Bekanntmachung des Hinweises auf die Patenterteilung: **01.10.2003**
(21) Anmeldenummer: 00936696.4
(22) Anmeldetag: 13.04.2000
(51) Int. Cl.: H01L 21/00

(54) **BEHANDLUNGSVORRICHTUNG FÜR SILIZIUM-SCHEIBEN**
DEVICE FOR TREATING SILICON WAFERS
DISPOSITIF DE TRAITEMENT POUR DES TRANCHES DE SILICIUM

(30) Priorität: 27.04.1999 DE 19918922; 09.12.1999 DE 19959299
(43) Veröffentlichungstag der Anmeldung: 23.01.2002
(73) Patentinhaber: Gebrüder Decker GmbH & Co. Kg, 90491 Nürnberg (DE)
(72) Erfinder: WERFEL, Frank, D-04277 Leipzig (DE); SEEBERGER, Jürgen, D-94036 Passau (DE)
(74) Vertreter: Rau, Albrecht
(86) Internationale Anmeldenummer: EP0003351
(87) Internationale Veröffentlichungsnummer: WO00065637

(56) Entgegenhaltungen:
- EP-A- 0 570 967

## Beschreibung

Die Erfindung betrifft eine Vorrichtung zur Behandlung von Gegenständen, insbesondere von Silizium-Scheiben gemäß dem Anspruch 1.

Aus der EP 0 570 967 A1 ist eine Vorrichtung zur Behandlung von Silicium-Wafern bekannt. Diese werden mehreren Vakuumprozeßschritten ausgesetzt. Die Wafer sind in einem Vakuumcontainer aufbewahrt, der einen Transport unter Vakuumbedingungen zuläßt. An der Unterseite des Behälters ist ein Vakuumventil vorgesehen, das durch einen Elektromagneten betätigbar ist. Nicht bekannt ist hieraus, wie Siliciumscheiben bei gleichzeitiger höchster Reinheit in einem Medium behandelt werden können.

Die enorme Steigerung der Halbleiterproduktion stellt immer von neuem eine Herausforderung an die einzelnen Prozeßschritte dar. Die Entwicklung zeigt sich besonders deutlich an der Leistungsfähigkeit von Speicherchips und den erzielten Linienbreiten, die vor 25 Jahren noch bei 12 µm lagen und heute mit der angestrebten 0,18 µm - Technologie die Miniaturisierung fast um den Faktor 10 erhöht haben. Diese von der Miniaturisierung vorgegebenen Forderungen haben dazu geführt, daß die in der Halbleitertechnik verwendeten Geräte einen sehr hohen Standard haben.

Während die Fabrikationsschritte der Lithographie durch vergrößerte numerische Aperturen, kürzere Lichtweilenlängen und durch verbesserte Lacktechnik immer perfekter gestaltet wurden, sind die Vorprozesse der Reinigung, des Ätzens und der Trockenschritte weit weniger grundsätzlichen technologischen Verbesserungen in den letzten Jahren unterzogen worden. Der Grund dafür ist vor allem in den sehr konservativen, stark fragmentierten naßchemischen oder gasförmigen Behandlungsschritten zu suchen.

Grundlegend für die bisherige Technik sind die Schritte der Reinigung, der Ätzung und der Trocknung. Dies geschieht durch Tauchverfahren in chemischen Bädern durch direkte oder indirekte Reinigung in schallerregten oder in mit Gasen beladenen Flüssigkeiten. Die Vorprozesse zur Ätzung und Reinigung von Kontaminationen oder sub-Mikrometer-Partikeln auf den Silizium-Scheiben, den sogenannten Wafern, sind besonders kritisch, da die fehlerhaften Bereiche weiter verarbeitet werden und letztendlich multiplikativ die Ausbeute an funktionstüchtigen Bauelementen verringern.

In der Praxis entstehen über 50 % des Ausbeuteverlustes der Produktion von integrierten Schaltungen durch Mikro-Kontamination auf den Silizium-Scheiben. Damit beeinflußt die Waferbehandlung in den Vorprozessen ganz wesentlich die Leistungsfähigkeit der Halbleiterschaltkreise, die Produktivität in der Herstellung und die Reproduzierbarkeit und Verläßlichkeit der Bauelemente.

Aufgrund der Wechselwirkungsprozesse mit den Silizium-Oberflächen unterscheidet man zwei Klassen in der Waferbehandlung: Das naßchemische Ätzen und das naßchemische Reinigen. Beide Prozesse werden sowohl in der Scheibenherstellung als Rohmaterial, als in der Weiterbehandlung durch den Chiphersteller angewendet.

Die naßchemische Behandlung erfolgt üblicherweise in Tauchbädern oder in Chemikaliensprühanlagen, wobei hier höchste Anforderungen sowohl an die Reinheit der Chemikalien, als auch an die Resistenz und Reinheit der eingesetzten Werkstoffe, wie Polytetrafluoräthylen (= PTFE) oder Polyvinylidenfluoride (= PVDF), gestellt werden und eine absolute Partikelvermeidung höchste Priorität genießt.

In der Tauchtechnik werden die Wafer in Paketen zu mehreren Scheiben senkrecht in die Bäder mit den Chemikalien oder Spülmitteln eingetaucht.

Durch Umwälzpumpen wird eine gerichtete Strömung von unten nach oben erzeugt.

Beim Ätzprozeß soll eine möglichst gleichmäßige Ätzhomogenität auf der Scheibenoberfläche erreicht werden. Wegen der Abriebprodukte in den notwendigen Antriebsteilen wird bisher auf eine Drehung der Silizium-Scheiben als Kompromiß verzichtet. Das Problem des Abriebs von bewegten Teilen, vor allem als Funktion der Zeit, hat bei vielen Prozessen der Halbleitertechnik inzwischen ein so starkes Gewicht, daß auf die Drehung in weiten Bereichen der Vorprozesse verzichtet wird.

Mehr noch steigen die Anforderungen an die Oberflächenqualität der Wafer bei jedem neuen Schritt der Miniaturisierung oder des Einsatzes neuer Maschinen und Werkzeuge im Fabrikationsprozeß. Neue Verfahren der Oberflächenphysik, wie der Beschuß der Oberfläche mit unterkühlten oder gefrorenen Gaskristallen ("Schnee"), sollen die gewünschte Reinheit erzeugen. Nachfolgende Spülprozesse mit deionisierten Wasser gehören auch heute noch zu den Standard-Reinigungsschritten.

Hochspezifische Ultraschall-Technologien werden eingesetzt, um über gesteuerte Kavitationsmechanismen beim Entstehen und Zerplatzen von Gasblasen die Effektivität der Flüssigkeitsreinigung gerade in den feinen Mikrostrukturen von 0,18 bis 0,25 um weiter zu verbessern.

Trotz der immer wieder aufkommenden Diskussion über die baldige Ablösung der naßchemischen Prozesse durch trocken ablaufende Verfahren, bleibt die Naßchemie vermutlich noch für längere Zeit der Schlüssel für die Waferbehandlung in den Vorstufen.

Ein Wunsch für die bisherigen Technologien ist die Drehung der Silizium-Scheiben, praktiziert allerdings bisher nur in den partikelunkritischen Prozessen (spin etching, spin drying). Die technische Auslegung ist hier so gestaltet, daß die Silizium-Scheiben in einen Kunststoffkorb, einen sogenannten Wafer-Carrier, eingesetzt werden. An einer der gegenüberliegenden Außenseiten ist axial ein Zahnrad oder eine Mitnehmerrolle angebracht. Beim Einsetzen des Korbes in den Behälter greift eine Antriebs-Einheit in das Zahnrad und dreht den Korb im Bad. Die Drehzahlen werden mit 1 - 60 min⁻¹ klein gehalten.

Der Korb kann auch durch einen Käfig ersetzt werden, wobei die Silizium-Scheiben in drei oder vier geschlitzten Stäben gehalten werden. Die Stäbe können durch ein Getriebe einzeln oder als Gruppe gedreht werden und nehmen dabei die Scheiben bei der Drehung mit. Der Vorteil der Stabhalterung ist die geringe Abschattung der Scheiben.

Bei allen bisher verwendeten Drehvorrichtungen für die Silizium-Scheiben in den verschiedenen Behandlungsschritten verursachen die verwendeten Teile, Zahnräder, Gleit- oder Rollenlager, einen starken Partikelabrieb. Aus diesen Gründen wird auf eine Drehung der Scheiben in konventioneller Art und Weise von den Halbleiterherstellern in kritischen Bereichen verzichtet, auch wenn damit Einbußen in der Homogenität der Behandlungsschritte hingenommen werden müssen.

Der Erfindung liegt die Aufgabe zugrunde, eine Vorrichtung zur Behandlung von Gegenständen bereitzustellen, bei der eine gleichmäßige Behandlung der Gegenstände bei gleichzeitiger höchster Reinheit gewährleistet ist.

Die Aufgabe wird durch die Merkmale des kennzeichnenden Teils des Anspruches 1 gelöst. Der Kern der Erfindung besteht darin, eine drehantreibbare Träger-Einrichtung berührungslos in supraleitenden Magnet-Lagern zu lagern. Die hierdurch erzielten Vorteile sind zahlreich. Die Lagerposition ist selbststabilisierend. Die Reibungsverluste, besonders bei hohen Drehzahlen sind sehr gering. Bis auf die Kühlung der Supraleiter ist kein Regelsystem der Lager erforderlich, wodurch die Zuverlässigkeit erhöht wird. Die Welle und die ortsfesten Lager-Teile können vakuumdicht voneinander abgedichtet werden, wodurch ein Eindringen des gegebenenfalls hochaggressiven Mediums in den ortsfesten Lager-Teil vermieden wird. Die Lagerung weist besondere Eigenschaften bei der Dämpfung von unerwünschten Schwingungen auf, die keiner eigenen Regelung bedürfen. Das Lager besitzt eine hohe Unwuchtunempfindlichkeit. Es ist wartungsfrei und besitzt eine hohe Lebensdauer.

Der Vorteil der Vorrichtung gemäß Anspruch 3 besteht darin, daß die Welle einfach aus dem ortsfesten, zweiten Lager-Teil gehoben und ausgetauscht werden kann.

Weitere vorteilhafte Ausgestaltungen der Erfindung ergeben sich aus den Unteransprüchen.

Zusätzliche Merkmale und Vorteile der Erfindung ergeben sich aus der Beschreibung von sechs Ausführungsbeispielen anhand der Zeichnung. Es zeigen:
- Fig. 1: eine schematische perspektivische Ansicht der Erfindung gemäß einer ersten Ausführungsform,
- Fig. 2: x eine Draufsicht auf die Erfindung gemäß der ersten Ausführungsform,
- Fig. 3: eine Schnittdarstellung gemäß der Schnittlinie III-III in Fig. 2,
- Fig. 4: eine Schnittdarstellung gemäß der Schnittlinie IV-IV in Fig. 2,
- Fig. 5: eine Teilansicht der Erfindung gemäß einer zweiten Ausführungsform,
- Fig. 6: eine Teilquerschnittsdarstellung der Erfindung gemäß einer dritten Ausführungsform,
- Fig. 7: eine Querschnittsdarstellung der Erfindung gemäß einer vierten Ausführungsform,
- Fig. 8: eine Querschnittsdarstellung der Erfindung gemäß einer fünften Ausführungsform und
- Fig. 9: eine Querschnittsdarstellung der Erfindung gemäß einer sechsten Ausführungsform.

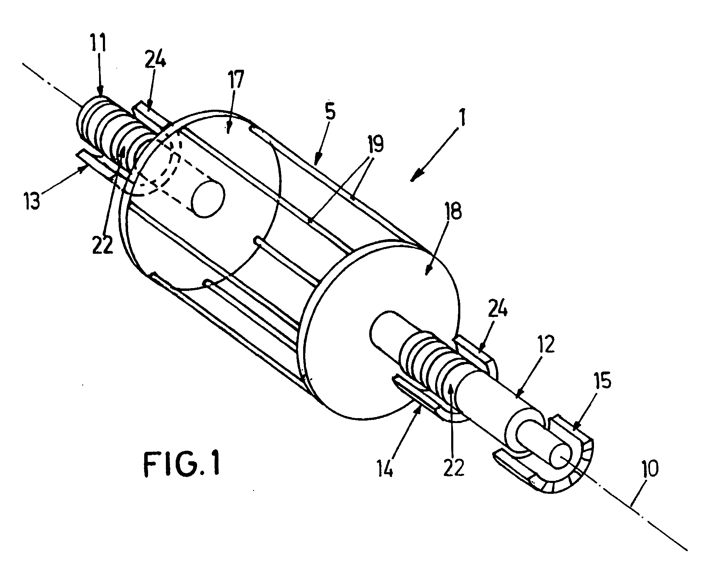

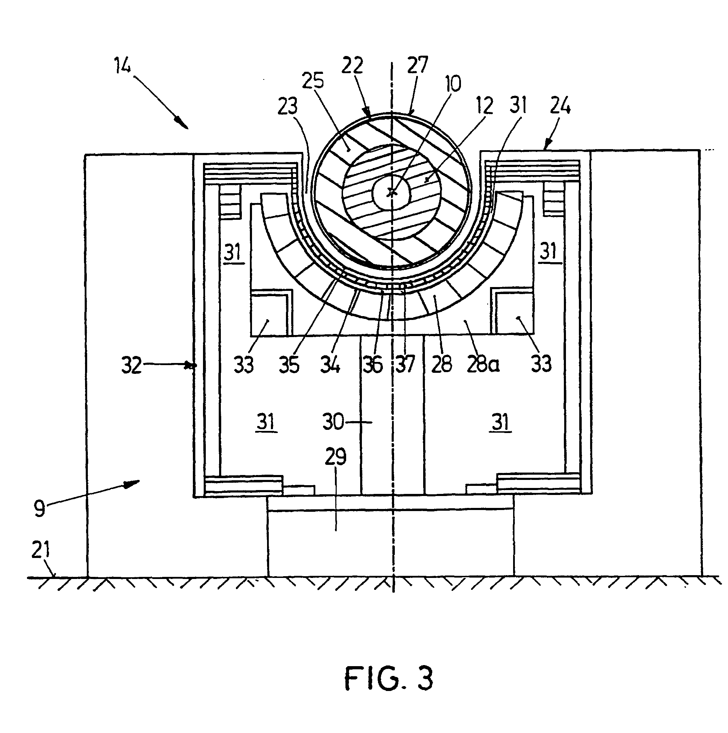

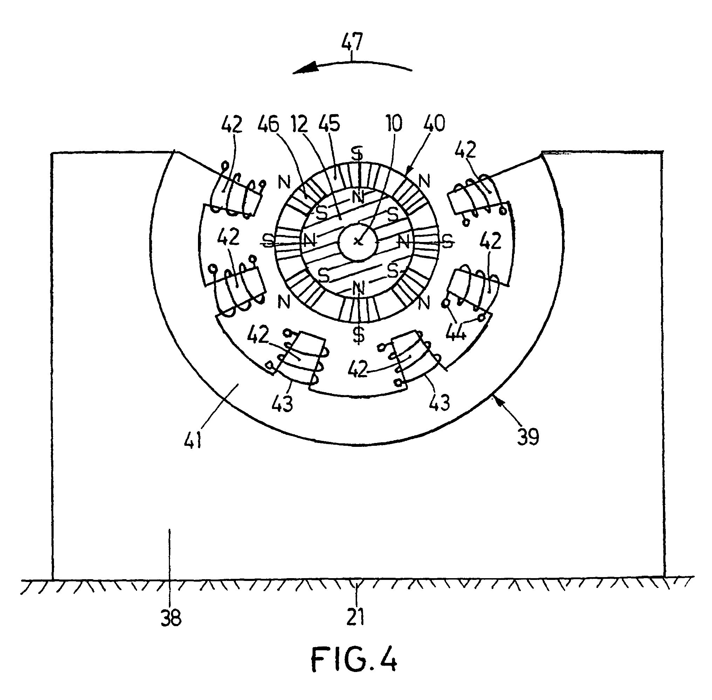

Eine erste Ausführungsform der Erfindung wird im folgenden unter Bezugnahme auf die Fig. 1 bis 4 beschrieben. Eine Vorrichtung 1 dient der naßchemischen und gasförmigen Behandlung von Gegenständen, insbesondere von Silizium-Scheiben 2, die auch als Wafer bezeichnet werden, mit einem Medium 3. Die Vorrichtung 1 weist einen mit dem Medium 3 gefüllten oder zu füllenden Behälter 4 auf, in dem eine Träger-Einrichtung 5 zur Aufnahme der Silizium-Scheiben 2 drehbar angeordnet ist. Die Träger-Einrichtung 5 ist in zwei an den Stirnseiten 6, 7 des Behälters 4 angeordneten Lagerblöcken 8, 9 gelagert. Hierzu sind an den gegenüberliegenden Seiten der Träger-Einrichtung 5 konzentrisch zu einer im wesentlichen horizontal verlaufenden Drehachse 10 ein Wellen-Stumpf 11 und ein Wellen-Antriebs-Stumpf 12 vorgesehen, welche zusammen eine Welle bilden. Der Wellen-Stumpf 11 und der Wellen-Antriebs-Stumpf 12 sind in in den Lagerblöcken 8 bzw. 9 vorgesehenen Lagern 13 bzw. 14 magnetisch gelagert. In dem Lagerblock 9 ist ferner eine Antriebs-Einheit 15 zum Drehantrieb der Welle vorgesehen.

Der Behälter 4 entspricht den zur Behandlung von Silizium-Scheiben 2 bekannten Behältern und ist aus einem hochkorrosionsbeständigen Kunststoff gefertigt. Die Behälter 4 können in Form eines Beckens zur Flüssigkeitsbehandlung oder einer Kammer zur Gas- oder Sprühbehandlung ausgebildet sein. Zusätzlich ist der Behälter 4 auf seiner Innenseite mit einem Behälter-Überzug 16 aus einem säureresistenten und chemisch möglichst inerten Material, insbesondere PTFE oder PVDF versehen. Als Medium 3 werden in Abhängigkeit von dem Bearbeitungsschritt, dem die Silizium-Scheiben 2 unterworfen werden sollen, verschiedene flüssige oder gasförmige Substanzen verwendet.

Die Träger-Einrichtung 5 weist jeweils stirnseitig konzentrisch zur Drehachse 10 angeordnete, zueinander parallele Träger-Scheiben 17, 18 auf, welche entlang ihres Umfangs über parallel zur Drehachse 10 verlaufende Träger-Stäbe 19 verbunden sind. Die Träger-Stäbe 19 weisen Schlitze 20 auf, in die die Silizium-Scheiben 2 eingreifen und somit gehalten werden.

Es sind mindestens drei Träger-Stäbe 19 vorgesehen. Es können jedoch auch zusätzlich weitere Träger-Stäbe 19 vorgesehen sein. Zur Bestückung der Träger-Einrichtung 5 mit Silizium-Scheiben 2 können ein oder mehrere Träger-Stäbe 19 entfernt werden. Die in der Träger-Einrichtung 5 fixierten Silizium-Scheiben 2 sind konzentrisch zur Drehachse 10 und parallel zueinander angeordnet. Hierdurch wird bei einer Drehung der Träger-Einrichtung 5 um die Drehachse 10 in dem Medium 3 sichergestellt, daß die Oberflächen der Silizium-Scheiben 2 möglichst gleichmäßig dem Medium 3 ausgesetzt werden und so keine Inhomogenitäten oder Fehlstellen entstehen. Es können auch andere bekannte, unter anderem eingangs beschriebene Träger-Einrichtungen verwendet werden. Die Lagerblöcke 8, 9 sind gegenüber einem Maschinen-Boden 21 abgestützt. Die Lager 13 und 14, die im wesentlichen gleich ausgebildet sind, weisen ein konzentrisch zur Drehachse 10 auf dem Wellen-Stumpf 11 bzw. dem Wellen-Antriebs-Stumpf 12 vorgesehenes erstes Lager-Teil 22 auf. In den Lagerblöcken 8 und 9 sind die ersten Lager-Teile 22 teilweise, insbesondere zu 50 %, umgebende, durch einen Lager-Spalt 23 voneinander getrennte zweite Lager-Teile 24 vorgesehen. Der Lager-Spalt 23 weist typischerweise eine Breite von 0,5 bis 10 mm auf.

Das erste Lager-Teil 22 weist den Wellen-Antriebs-Stumpf 12 konzentrisch umgebende, mit diesem verbundene, entlang der Drehachse 10 benachbart angeordnete, permanente Ringmagnete 25 auf, wobei jeweils einander benachbart angeordnete Ringmagnete 25 entweder ein anziehende (entgegengesetzte magnetische Polung) oder eine abstoßende Kraft (gleiche Pole) oder eine Kombination aufweisen, so daß entlang der Drehachse 10 beispielsweise eine Abfolge entsteht S, N; N, S; S, N; N, S; ..., wobei N für den magnetischen Nordpol und S für den magnetischen Südpol steht. Die Ringmagnete 25 sind aus SmCo, Sm₂CO₁₇ oder NdFeB hergestellt. Letzteres erreicht die höchsten Energiedichten und einen Remanenzwert von 1,4 Tesla. Es können jedoch auch andere Materialien verwendet werden, die als Permanentmagnete einen großen Magnetfluß besitzen. Zwischen den Ringmagneten 25 sind Ringscheiben 26 mit großer Permeabilität vorgesehen, so daß der magnetische Fluß im Lager-Spalt 23 im wesentlichen senkrecht zur Drehachse 10 verläuft. Die Ringscheiben 26 weisen typischerweise eine Dicke von 1 bis 2 mm auf. Das erste Lager-Teil 22 ist zum Schutz gegen das im Lager-Spalt 23 befindliche Medium 3 mit einem Schutz-Überzug 27 versehen, der aus demselben Material hergestellt ist, wie der Behälter-Überzug 16. Die Ringmagnete 25, die Ringscheiben 26 sowie die Stumpfe 11, 12 kommen somit mit dem Medium 3 nicht in Berührung.

Die zweiten Lager-Teile 24 weisen jeweils eine aus einem supraleitenden Material gebildete, nach oben offene, parallel zur Drehachse 10 verlaufende Lager-Halbschale 28 auf, welche zur Aufrechterhaltung des supraleitenden Zustands von einem Kühl-Mantel 28a umgeben ist, welcher mit einer Kühl-Einrichtung 29 über eine Wärme-Abführ-Leitung 30 verbunden ist. Bei dem supraleitenden Material handelt es sich um einen schmelztexturierten Hochtemperatursupraleiter der Zusammensetzung ReBa₂Cu₃Oₓ, wobei Re=Sm, Nd, Y ist. Die Herstellung schmelztexturierter Hochtemperatursupraleiter ist in Werfel, Flögel - Delor, Wippich, "YBaCuO Large Scale Melt Texturing in a Temperature Gradiant", Inst. Phys. Conf. Ser. No. 158, S. 821 ff., 1997 beschrieben, auf das hiermit verwiesen wird. Die kritische Stromdichte ist größer als 30 kA/cm². Die Korngrößen und Korngrenzen erzeugen im Material besondere Hysterese- und Dämpfungseigenschaften. Die Hochtemperatursupraleiter-Materialien weisen Kristalle mit einer radial ähnlichen Textur und eine Sprungtemperatur von bis zu 92 Kelvin (entspr. - 181 °C) auf, so daß die Supraleiter-Materialien auch durch flüssigen Stickstoff unterhalb der Sprungtemperatur gehalten werden können. Es können auch andere Supraleiter-Materialien verwendet werden.

Die Kühl-Einrichtung 29 weist einen geschlossenen Kryostaten auf, der nach dem Stirlingprinzip arbeitet. Es ist auch möglich, Kältemaschinen vorzusehen, die nach dem Gifford-McMahon- oder dem Pulse-Tube-Verfahren arbeiten. Die Wärme-Abführ-Leitung 30 und der Kühl-Mantel 28a bestehen aus einem sehr gut wärmeleitenden Material, insbesondere Kupfer. Die Lager-Halbschale 28, der Kühl-Mantel 28a und die Wärme-Abführ-Leitung 30 sind durch einen Zwischen-Raum 31 getrennt von einem in dem Lagerblock 8 bzw. 9 eingebetteten Zwischen-Gehäuse 32 umgeben. Zur Erhöhung der Isolation der Lager-Halbschale 28 gegenüber der Umgebung ist der Zwischen-Raum 31 evakuiert. Der Gas-Restdruck im Zwischen-Raum 31 ist kleiner als 10⁻² Pascal. Zur Absorption von Restgasmolekülen sind in dem Kühl-Mantel 28a Aktivkohle-Zellen 33 vorgesehen, die durch die Absorption von Gasmolekülen beim Abkühlen die Qualität des Vakuums erhöhen. Das zweite Lager-Teil 24 und insbesondere die Lager-Halbschale 28 weisen einen U-förmigen Querschnitt mit einer Vertiefung 34 auf, die das erste Lager-Teil 22 aufnimmt. Zumindest im Bereich der Vertiefung 34 weist das Zwischen-Gehäuse 32 einen Schutz-Überzug 35 auf, der aus demselben Material besteht, wie der Schutz-Überzug 27. Zur präzisen Aufrechterhaltung der Form des Lager-Spalts 23 sowie des einen Teil des Zwischen-Raums 31 bildenden Vakuum-Spalts 36 zwischen Schutz-Überzug 35 und Lager-Halbschale 28 ist das Zwischen-Gehäuse 32 in diesem Bereich mit einer Stützschicht 37 versehen, welche aus einem glasfaserverstärkten oder kohlefaserverstärkten Kunststoff besteht. Durch diese Anordnung ist es möglich, im Bereich des Lagerspalts über eine Strecke von wenigen Millimetern eine Isolation für einen Temperaturgradienten von 250 Kelvin und mehr aufrechtzuerhalten, so daß zum einen die supraleitende Lager-Halbschale 28 unterhalb der Sprungtemperatur gehalten wird und zum anderen das Medium 3 im Lager-Spalt 23 nicht einfriert.

Die benachbart zum Lager 14 angeordnete Antriebs-Einheit 15 weist einen in einem Stator-Block 38 angeordneten Stator 39 sowie einen mit dem Wellen-Antriebs-Stumpf 12 einteilig ausgebildeten Rotor 40 auf. Der Stator 39 weist einen im Querschnitt kreissektorförmigen nach oben offenen Spulen-Kern 41 mit radial zur Drehachse 10 nach innen vorstehenden Spulen-Zapfen 42, die einteilig mit dem Spulen-Kern 41 ausgebildet sind, auf. Die Spulen-Zapfen 42 sind von Antriebs-Spulen 43 mit Anschlüssen 44 derart umwickelt, daß die durch die Antriebs-Spulen 43 erzeugten Magnetfelder im wesentlichen radial zur Drehachse 10 verlaufen. Die Anschlüsse 44 sind in bekannter Weise mit einer Stromversorgungs-/Steuer-Einrichtung verbunden. Der Rotor 40 weist einen den Stumpf 12 konzentrisch umgebenden Rotor-Mantel 45 auf, in den permanente Stab-Magnete 46 mit abwechselnder Polung eingesetzt sind, so daß entlang des Umfangs eine Polungsfolge N, S, N, S, ... entsteht. Die durch die permanenten Stab-Magnete 46 erzeugten Magnetfelder verlaufen im wesentlichen radial zur Drehachse 10. Als Material für die Stab-Magneten 46 kann dasselbe Material wie für die Ringmagneten 25 gewählt werden. Der Rotor 40 kann einen Kurzschlußläufer tragen. Die elektrische Ansteuerung der einander benachbarten Antriebs-Spulen 43 erfolgt in zeitlicher Abfolge in der Weise, daß das durch eine Antriebs-Spule 43 erzeugte Magnetfeld den Rotor 40 in einer Dreh-Richtung 47 abstößt und gleichzeitig das durch die in Dreh-Richtung 47 nachgeordnete Antriebs-Spule 43 erzeugte Magnetfeld den Rotor 40 anzieht. Auf diese Weise wird ein Drehmoment auf den Rotor 40 übertragen. Dieses Prinzip ist von normalen Drehstrom-Motoren bekannt. Alternativ kann auch ein anderer Drehstrom-Antrieb verwendet werden, mit der Besonderheit, daß die Antriebsspule einseitig offen ist, so daß der Wellen-Antriebs-Stumpf 12 nach oben herausgenommen werden kann.

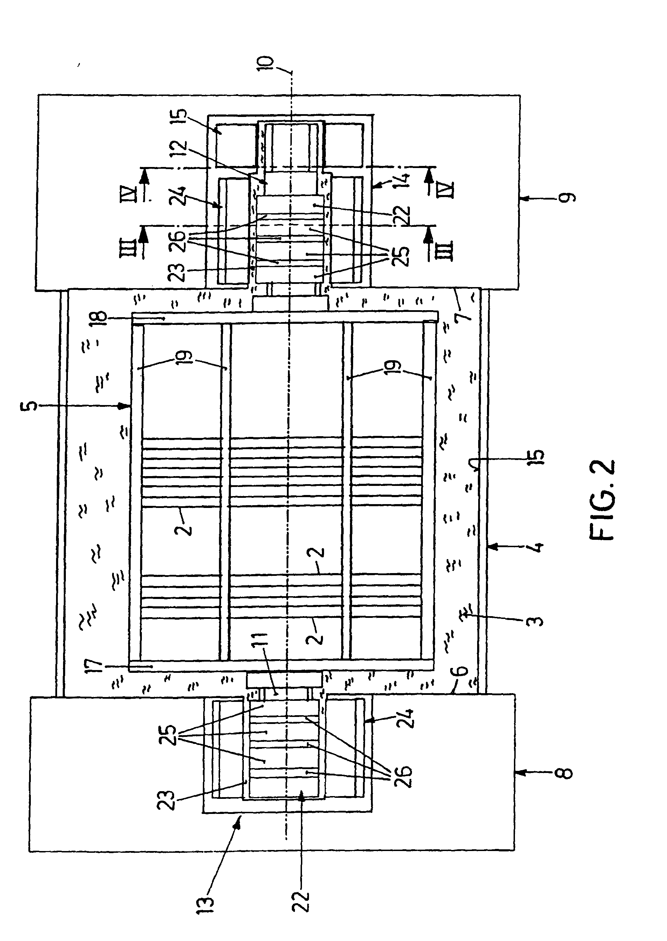

Im folgenden wird die Funktionsweise der Vorrichtung 1 beim Betrieb und insbesondere die Funktionsweise der Lager 13 und 14 beschrieben. Anfänglich befindet sich die Einheit aus Träger-Einrichtung 5 sowie Wellen-Stumpf 11 und Wellen-Antriebs-Stumpf 12 von einem Roboterarm (nicht gezeigt) gehalten außerhalb des Behälters 4 und der zweiten Lager-Teile 24. In dieser Position wird die Träger-Einrichtung 5 mit Silizium-Scheiben 2 bestückt, indem ein oder mehrere Stäbe 19 entfernt, die Silizium-Scheiben 2 eingesetzt und anschließend die Silizium-Scheiben 2 durch Schließen der Träger-Stäbe 19 arretiert werden. Nun wird die Einheit aus Träger-Einrichtung 5 sowie Wellen-Stumpf 11 und Wellen-Antriebs-Stumpf 12 durch den Roboterarm in die in Fig. 2 gezeigte Position gehoben und mechanisch in einer sogenannten Einfrier-Position gehalten. Anschließend werden die Lager-Halbschalen 28 auf eine Temperatur unterhalb der Sprungtemperatur des supraleitenden Materials abgekühlt. Danach wird die Träger-Einrichtung 5 durch den Roboterarm freigegeben und "schwebt" getrennt durch einen Lager-Spalt 23 in den zweiten Lager-Teilen 24. Dies ist die Folge einer diamagnetischen Wechselwirkung, daß unter dem Einfluß eines äußeren Magnetfelds in der supraleitenden Lager-Halbschale 28 charakteristische Ströme angeworfen werden, die einen genau entgegengerichteten Magnetfluß erzeugen. Da die angeworfenen Ströme im wesentlichen widerstandslos kontinuierlich fließen und selber wiederum ein gegenläufiges Magnetfeld erzeugen, welches das Magnetfeld der Ringmagnete 25 abstößt, arbeitet das System im wesentlichen leistungslos. Auf diese Weise stoßen sich das erste Lager-Teil 22 und das zweite Lager-Teil 24 voneinander ab. Veränderungen der Position erzeugen rücktreibende magnetische Kräfte. Durch die Anordnung mehrerer Ringmagnete 25 entlang der Drehachse 10 ist die Welle mit einer Steifigkeit sowohl axial als auch radial bezüglich der Drehachse 10 gelagert. Die Lager 13, 14 besitzen eine axiale und radiale Lagersteifigkeit von jeweils mehr als 80 N/mm, insbesondere von über 200 N/mm. Verschiebungen in axialer oder radialer Richtung erzeugen durch die Fixierung des Magnetflusses im Supraleiter, dem sogenannten Pinningeffekt, Gegenkräfte mit der Tendenz zur Rückstellung des ersten Lager-Teils 22 in die Ausgangslage, was als Schlüssel-Schloß-Prinzip bezeichnet wird. Dies erklärt die hohe Lagersteifigkeit und automatische Zentrierung des ersten Lager-Teils 22 relativ zum zweiten Lager-Teil 24. Die Lager 13, 14 dämpfen Schwingungen der Welle in einem Frequenzbereich von 0,1 Hz bis 1 kHz. Die Lagerung erlaubt Drehzahlen von bis zu 10000 min⁻¹. Das Gewicht der gelagerten Einheit kann 20 kg und mehr betragen. Durch die berührungslose Lagerung unterliegen die Lager 13, 14 keinem Verschleiß. Die Lager 13, 14 besitzen eine intrinsische Dämpfungscharakteristik, da geringe Änderungen des Magnetflusses etwa in der radialen Magnetisierung der Ringmagnete 25 im supraleitenden Material Wirbelströme und Bewegungen des Vortexgitters erzeugen. Die entstehenden Energien werden im Supraleiter freigesetzt und dämpfen somit Oszillationen der Welle. Die Lager 13, 14 funktionieren passiv, d. h. ohne elektronische Regelung, und sind damit ausfallsicher und wartungsfrei. In einer weiteren Methode zum Entfernen der Einheit aus Träger-Einrichtung 5 sowie Stümpfen 11, 12 wird die Kühl-Einrichtung 29 der Lager-Halbschalen 28 kurzzeitig deaktiviert, nachdem diese Einheit durch einen Roboterarm erfaßt worden ist. Die Temperatur der Lager-Halbschalen 28 steigt in die Nähe der Sprungtemperatur. Damit einher geht eine Reduktion der magnetischen Kräfte, ohne daß der Schwebezustand der Einheit beeinträchtigt wird, welche jetzt leichter aus den zweiten Lager-Teilen 24 herausgehoben werden kann, um die bearbeiteten Silizium-Scheiben 2 zu entfernen. Der besondere praktische Wert liegt in der einfachen Entfernung und Wiedereinsetzung der Trägereinrichtung 5 in die Lager-Teile 24. Hierzu bedarf es keiner Schalt- oder Regelfunktionen im Lagerbereich.

Durch die berührungs- und reibungsfrei arbeitenden Lager 13, 14 wird die sonst durch Lagerabrieb entstehende Zahl von Fremdpartikeln im Medium 3, welche die Qualität der Silizium-Scheiben 2 beeinträchtigen, stark reduziert. Somit kann für die Silizium-Scheiben 2 eine rotierende Behandlung durchgeführt werden, welche den Vorteil einer hohen Homogenität der ablaufenden flüssigen, festen oder gasförmigen Prozesse auf der Oberfläche der Silizium-Scheiben 2 besitzt. Ein weiterer Vorteil der Drehung der Silizium-Scheiben 2 liegt in der Vermeidung von Bläschenhaftung auf der Oberfläche, welche sonst dazu führt, daß die flüssigen oder gasförmigen Medien an dieser Stelle die Oberfläche nicht angreifen können und Fehlstellen entstehen.

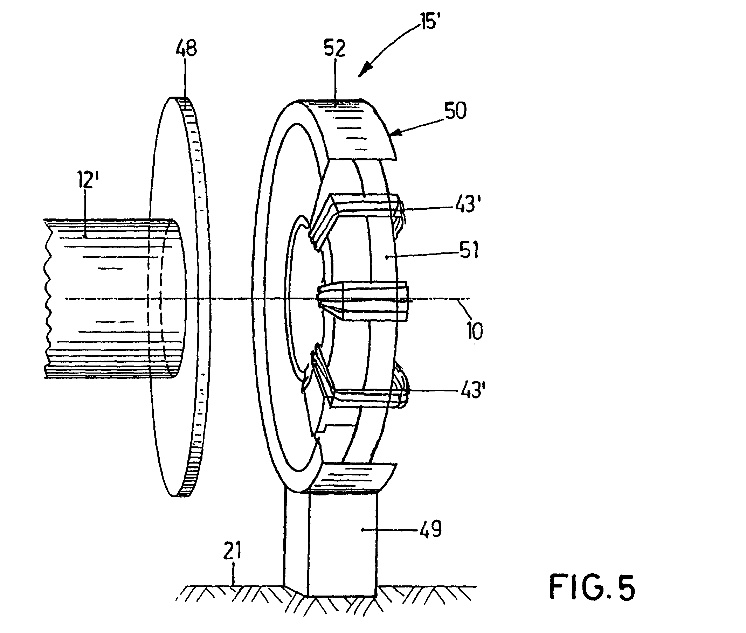

Im folgenden wird unter Bezugnahme auf Fig. 5 eine zweite Ausführungsform der Erfindung beschrieben. Identische Teile werden mit denselben Bezugszeichen wie in der ersten Ausführungsform versehen; verschiedene, jedoch funktionell gleichartige Teile werden mit denselben Bezugszeichen mit einem hochgesetzten Strich versehen. Ansonsten wird auf die Beschreibung zum ersten Ausführungsbeispiel verwiesen. Die zweite Ausführungsform unterscheidet sich von der ersten Ausführungsform lediglich durch den Aufbau der Antriebs-Einheit 15'. Am in Fig. 5 rechten Ende des Wellen-Antriebs-Stumpfes 12' ist eine senkrecht zur Drehachse 10 verlaufende Hysterese-Scheibe 48 aus einem Material mit einer ausgeprägten Hysterese-Kurve vorgesehen. Benachbart hierzu ist eine über eine Stütze 49 gegenüber dem Maschinen-Boden 21 abgestützte, konzentrisch zur Drehachse 10 verlaufende, als Spulen-Ring 50 ausgebildete Spulen-Einheit mit Drehstromwicklung vorgesehen. Der Spulen-Ring 50 weist einen Ring-Kern 51 auf, welcher an verschiedenen, gleichmäßig über den Ring-Kern 51 verteilten Positionen mit Antriebs-Spulen 43' umwickelt ist. Zum Schutz vor dem Medium 3 sind Ring-Kern 51 und Antriebs-Spulen 43' mit einem Schutz-Überzug 52 versehen, welcher aus demselben Material gefertigt ist, wie der Schutz-Überzug 27. Selbiges gilt für den Stumpf 12' und die Scheibe 48. Die Funktionsweise eines derartigen Antriebs ist bekannt. Beim Ummagnetisieren von hysteretischem Eisen tritt zwischen erregender magnetischer Feldstärke und magnetischer Induktion eine Phasenverschiebung auf. Diese hängt mit der geometrischen Form der Hysterese-Schleife zusammen und hängt darüber hinaus von der Amplitude der Wechselerregung ab. Dieses Prinzip macht sich der Hysterese-Antrieb gemäß Fig. 5 zunutze. Die Hysterese-Scheibe 48 ist als massive Scheibe ausgebildet und läßt sich gut ummanteln. Es ist auch möglich, die Hysterese-Scheibe 48 als Rohr auszubilden. Im Anlauf verhält sich der Hysterese-Antrieb wie ein Asynchronmotor; ist die Nenndrehzahl erreicht, ergibt sich ein Synchronlauf. Der Vorteil dieses Antriebs besteht vor allem darin, daß keine Stab-Magneten 46 benötigt werden und ein Synchronantrieb aufgebaut werden kann.

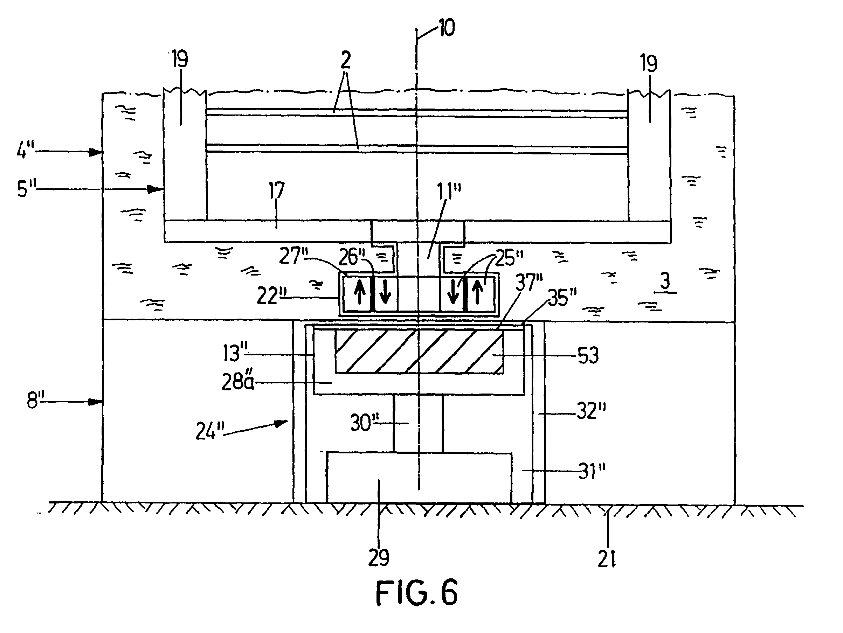

Im folgenden wird unter Bezugnahme auf Fig. 6 eine dritte Ausführungsform der Erfindung beschrieben. Identische Teile erhalten dieselben Bezugszeichen wie in der ersten Ausführungsform; verschiedene, jedoch funktionell gleichwertige Teile erhalten dieselben Bezugszeichen mit zwei hochgesetzten Strichen. Ansonsten wird auf die Beschreibung des ersten Ausführungsbeispiels verwiesen. Der zentrale Unterschied der dritten Ausführungsform gegenüber der ersten Ausführungsform besteht darin, daß die Drehachse 10 nicht horizontal, sondern vertikal verläuft. In dem Lagerblock 8" ist das zweite Lagerteil 24" vorgesehen, welches wie das Lager-Teil 24 der ersten Ausführungsform aufgebaut ist. Der einzige Unterschied besteht darin, daß anstelle einer Lager-Halbschale 28 eine Lager-Scheibe 53 aus einem supraleitenden Material vorgesehen ist. Oberhalb dieser ist der Behälter 4" angeordnet, in dem die Träger-Einrichtung 5" mit vertikal verlaufender Drehachse 10 angeordnet ist. Am in Fig. 6 unteren Ende der Träger-Einrichtung 5" ist das erste Lager-Teil 22" vorgesehen, welches konzentrisch zueinander verlaufende, parallel zu der Drehachse 10 magnetisierte Ringmagnete 25" aufweist. Es können mehr als zwei konzentrische Ringmagnete 25" vorgesehen sein. Die Magnetisierung jeweils benachbarter Ringmagnete 25" ist abwechselnd. Zwischen den Ringmagneten 25" können zusätzlich Ringscheiben 26" mit geringer Permeabilität vorgesehen sein. Das Lager 13" weist sowohl axiale als auch radiale Lagersteifigkeit auf. Zum Antrieb der Träger-Einrichtung 5" ist an dem in Fig. 6 nicht dargestellten oberen Ende der Träger-Einrichtung 5" eine Antriebs-Einheit 15' vorgesehen, wie sie in der zweiten Ausführungsform beschrieben ist. Zum Entfernen der Träger-Einheit 5" aus dem Behälter 4" wird der Spulen-Ring 50 quer zur Drehachse 10 verschwenkt, so daß die Träger-Einrichtung 5" nach oben aus dem Behälter 4" gezogen werden kann.

Es ist auch möglich, den Achsstumpf 11' zu verlängern und eine andere Antriebs-Einheit, wie z.B. in der ersten Ausführungsform, vorzusehen. Damit kann die Träger-Einrichtung 5" nach oben offen gehalten werden und erlaubt eine stirnseitige Beladung mit einem separaten Carrier-Käfig, z.B. aus zwei Halbschalen. Die Halbschalen besitzen geschlitzte, axiale Stäbe, in die die Silizium-Scheiben 2 eingefügt sind. Die beiden Halbschalen werden aufeinander gepreßt, axial in die Träger-Einrichtung 5' von oben hineingeschoben und in axialen Führungen fixiert.

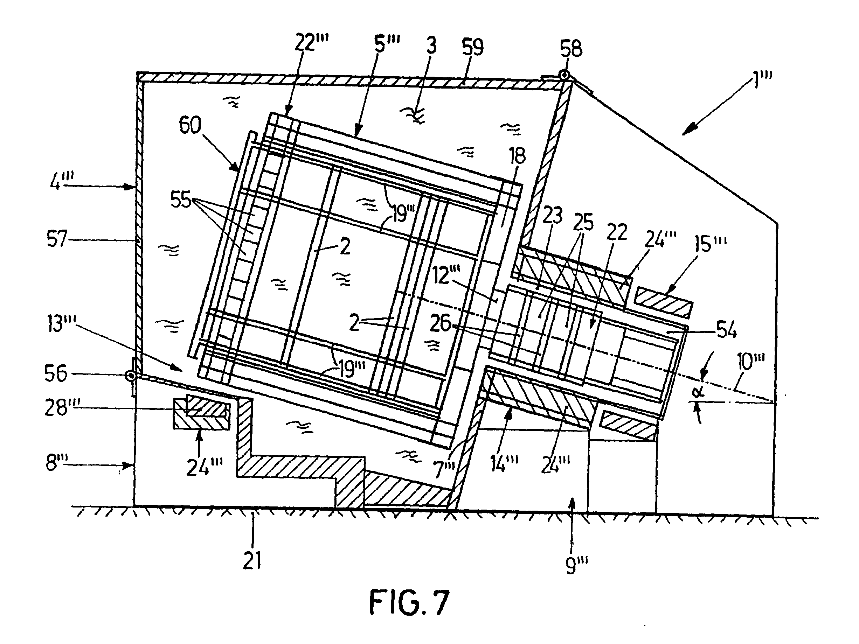

Die Lager 13, 14 der ersten Ausführungsform und das Lager 13" der dritten Ausführungsform können selbstverständlich miteinander kombiniert werden. Auf diese Weise kann die Lagersteifigkeit in radialer und axialer Richtung erhöht werden und die Drehachse einen Winkel zwischen 0 und 90 ° gegenüber der Horizontalen, d. h. eine beliebige Position zwischen einer horizontalen Anordnung und einer vertikalen Anordnung, einnehmen. Im folgenden wird unter Bezugnahme auf Fig. 7 eine vierte Ausführungsform der Erfindung beschrieben. Identische Teile erhalten dieselben Bezugszeichen wie in der ersten Ausführungsform, auf deren Beschreibung hiermit verwiesen wird. Konstruktiv unterschiedliche, jedoch funktionell gleichartige Teile erhalten dieselben Bezugszeichen mit drei hochgesetzten Strichen. Die Vorrichtung 1"' weist einen Lagerblock 9"' auf, in dem konzentrisch zu einer Drehachse 10"' ein ringzylindrisches Lager-Teil 24"' und eine ringzylindrische Antriebs-Einheit 15"' vorgesehen sind. Beide umgeben einen als Sackloch ausgebildeten, ringzylindrischen Lager-Raum 54, in dem der Wellen-Antriebs-Stumpf 12"' mittig angeordnet ist. Die Drehachse 10"' ist gegenüber der Horizontalen um einen Winkel α geneigt, für den gilt: 0° < α < 90° und insbesondere 5° < α < 30° und höchst vorteilhafterweise α = 15°. Die Träger-Einrichtung 5"' weist einen parallel zur Drehachse 10"' von außen einschiebbaren Hilfs-Träger-Korb 60 auf, der die Silizium-Scheiben 2 aufnimmt. Der Korb 60 kann endseitig in die Träger-Einrichtung 5'" eingeschoben bzw. aus dieser herausgenommen werden.

Die Träger-Einrichtung 5"' ist konzentrisch zur Drehachse 10"' angeordnet und mit dem Wellen-Antriebs-Stumpf 12"' verbunden. An dem dem Wellen-Antriebs-Stumpf 12"' abgewandten Ende der Träger-Einrichtung 5"' ist umfangsseitig das Lager-Teil 22"' vorgesehen. Das Lager-Teil 22"' weist entlang des Umfangs benachbart zueinander angeordnete Permanentmagnete 55 mit radialer Ausrichtung auf. In Fig. 7 unterhalb des Lager-Teils 22"' ist der Lagerblock 8"' mit dem Lager-Teil 24"' vorgesehen. Das Lager-Teil 24"' ist kreissegmentförmig ausgebildet und umgibt das Lager-Teil 22"' teilweise. Durch das Lager 13"' wird die Träger-Einrichtung 5"' in vertikaler Richtung abgestützt und quer dazu stabilisiert. Der Behälter 4"' weist eine über ein Scharnier 56 mit dem Lagerblock 8"' verbundene vertikale Seitenwand 57 und eine mit dem oberen Ende des Lagerblocks 9"' über ein Scharnier 58 verbundene Seitenwand 59 auf. Die Seitenwände 57 und 59 sind nach außen verschwenkbar.

Im folgenden wird der Betrieb der Vorrichtung 1"' genauer beschrieben. Zum Einsetzen der Träger-Einrichtung 5"' werden die Seitenwände 57 und 59 aufgeklappt, wodurch der Lager-Raum 54 zugänglich wird. Der Wellen-Antriebs-Stumpf 12"' wird leicht gegenüber der Horizontalen geneigt in den Lager-Raum 54 eingeführt. Anschließend wird das supraleitende Lager-Teil 24"' abgekühlt, bis dieses supraleitend wird. Aufgrund des oben beschriebenen Mechanismusses ist die Träger-Einrichtung 5"' nun reibungslos gelagert. Zur Abstützung der Träger-Einrichtung 5"' wird auch das Lager-Teil 24"' des Lagers 13"' unter die Sprungtemperatur abgekühlt. Vorteilhaft an dieser Anordnung ist die Möglichkeit der frontseitigen Beschickung der Träger-Einrichtung 5"'. Die gesamte Träger-Einrichtung 5"' einschließlich des Korbs 60 kann aus der Vorrichtung 1 entlang der Drehachse 10"' entnommen werden und einer gründlichen Reinigung zugeführt werden.

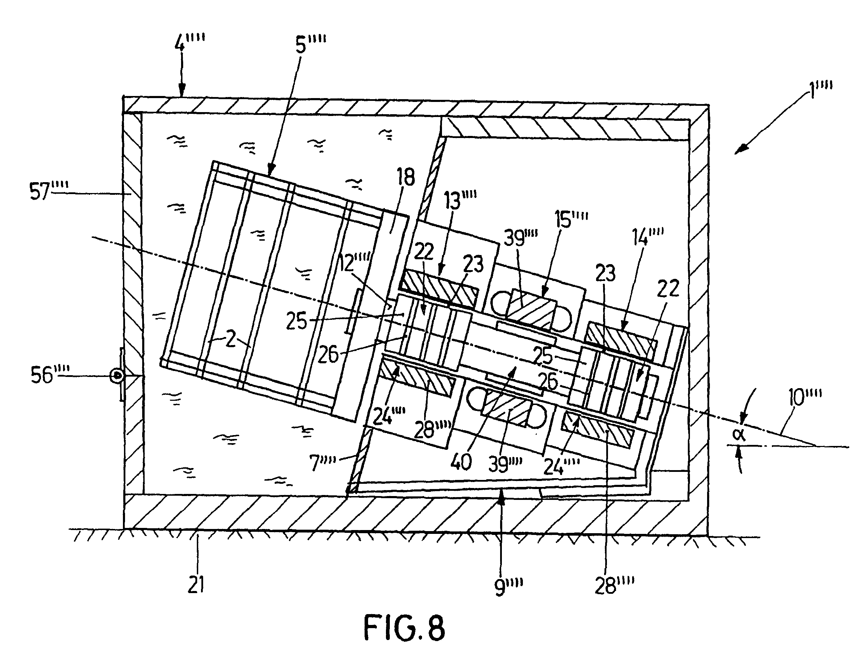

Im folgenden wird unter Bezugnahme auf Fig. 8 eine fünfte Ausführungsform der Erfindung beschrieben. Identische Teile erhalten dieselben Bezugszeichen wie in der ersten Ausführungsform, auf deren Beschreibung hiermit verwiesen wird. Konstruktiv unterschiedliche, jedoch funktionell gleichartige Teile erhalten dieselben Bezugszeichen mit vier hochgesetzten Strichen. Der wesentliche Unterschied der Vorrichtung 1"" gegenüber der Vorrichtung 1 besteht darin, daß die Träger-Einrichtung 5"" nicht an ihren beiden axialen Enden gelagert ist, sondern lediglich auf einer Seite. Hierfür sind benachbart zu der Träger-Einrichtung 5"" in dem Lager-Block 9"" jeweils zueinander benachbart das Lager 13"", die Antriebs-Einheit 15"" und das Lager 14"" vorgesehen. Die zweiten Lager-Teile 24"" sowie der Stator 39"" umgeben den Wellen-Antriebs-Stumpf 12"" ringzylindrisch. Der Behälter 4"" weist eine über ein Scharnier 56"" verbundene und verschwenkbare vertikale Seitenwand 57"" auf. Die Drehachse 10"" ist gegenüber der Horizontalen um einen Winkel α von ungefähr 15° geneigt.

Beim Betrieb der Vorrichtung 1"" kann die mit Silizium-Scheiben 2 beschickte Träger-Einrichtung 5"" in dem Behälter 5"" um die Drehachse 10"" gedreht werden. Der Vorteil der Ausführungsform besteht darin, daß die Silizium-Scheiben entlang der Drehachse 10"" entnommen werden können. Darüber hinaus kann die Einheit aus Träger-Einrichtung 5"" und Wellen-Antriebs-Stumpf 12"" ebenfalls entlang der Drehachse 10"" zu Reinigungsoder Reparaturzwecken entnommen werden. Eine separate Abstützung wie durch das Lager 13"' in der vierten Ausführungsform ist nicht erforderlich.

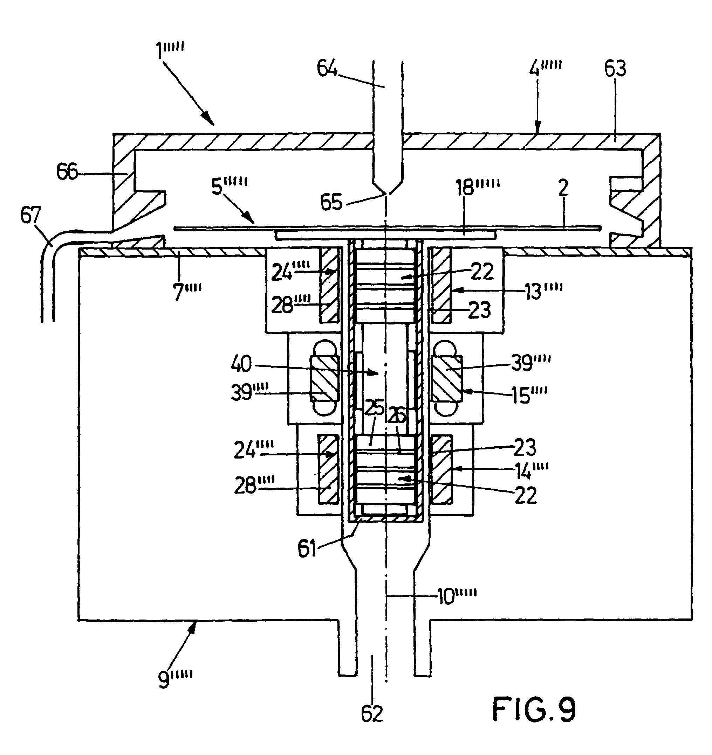

Im folgenden wird unter Bezugnahme auf Fig. 9 eine sechste Ausführungsform der Erfindung beschrieben. Identische Teile erhalten dieselben Bezugszeichen wie bei der fünften, in Fig. 8 dargestellten Ausführungsform, auf deren Beschreibung hiermit verwiesen wird. Konstruktiv unterschiedliche, jedoch funktionell gleichartige Teile erhalten dieselben Bezugszeichen mit fünf hochgesetzten Strichen. Der Aufbau der Lagerteile 24"" sowie der Antriebseinheit 15"" entspricht dem Aufbau gemäß der fünften Ausführungsform. Selbiges gilt für den Aufbau des Rotors 40 mit der Ausnahme, daß dieser von einem resistenten zylinderförmigen Mantel 61 aus Kunststoff umgeben ist. Im Unterschied zur fünften Ausführungsform ist die Anordnung des Rotors 40 derart gewählt, daß die Drehachse 10""' vertikal verläuft. Der Lagerblock 9""' weist an seinem unteren Ende eine Ablauf-Öffnung 62 auf, die mit dem Ringraum zwischen dem Mantel 61 und den Lager-Teilen 24"" bzw. der Antriebs-Einheit 15"" verbunden ist. Die mit dem Rotor 40 verbundene Träger-Scheibe 18""' verläuft im wesentlichen horizontal und dient mit ihrer Oberseite als Auflage für eine Silizium-Scheibe 2. Der Behälter 4""', der als Deckel 63 ausgebildet ist, ist seitlich und oberhalb der Silizium-Scheibe 2 angeordnet. Es ist selbstverständlich möglich, die Vorrichtung 1""' auch ohne den Behälter 4""' zu betreiben. Im Deckel 63 ist mittig eine Zuführ-Leitung 64 angeordnet, die in dem vom Deckel 63 begrenzten Raum eine Düse 65 aufweist. Seitlich unterhalb der Silizium-Scheibe 2 weist der Deckel 63 einen Deckelrand 66 mit einer Abführ-Leitung 67 auf.

Im folgenden wird die Funktionsweise der Vorrichtung 1""' gemäß der sechsten Ausführungsform beschrieben. Die Träger-Scheibe 18""' ist wie bei der fünften Ausführungsform reibungsfrei drehantreibbar gelagert. Zum Auftragen von Fotolack auf die Silizium-Scheibe 2 wird ein Tropfen Fotolack durch die Düse 5 mittig auf die rotierende Silizium-Scheibe 2 aufgebracht. In Folge der Zentrifugalkräfte verteilt sich der Fotolack schnell, dünn und homogen auf der Oberfläche der Silizium-Scheibe 2. Überschüssiger Lack wird durch die Abführ-Leitung 67 und die Ablauf-Öffnung 62 abgeführt. Die Vorrichtung 1""' kann darüber hinaus für die in den vorausgehenden Ausführungsformen beschriebenen Ätz- und Reinigungsprozesse verwendet werden. Darüber hinaus kann die Silizium-Scheibe 2 in der Vorrichtung 1""' trocken zentrifugiert werden.

Ferner kann die Vorrichtung 1'"" zur Prüfung der Fehlerfreiheit der Kristallund Oberflächenstruktur der Silizium-Scheibe 2 verwendet werden. Durch die Art der Lagerung des Rotors 40 ist es möglich, die Silizium-Scheibe 2 sehr schnell auf sehr hohe Drehzahlen, wie sie eingangs beschrieben sind, zu beschleunigen. Haarrisse und andere Fehlstellen in der Kristallstruktur der Silizium-Scheibe 2 wachsen bei entsprechend hohen Zentrifugalkräften und können so einfach ermittelt werden. Gegebenenfalls führen diese Fehlstellen sogar zum Bruch der Scheibe 2. Die Vorrichtung 1""' kann somit auch ohne den Einsatz eines Behandlungs-Mediums 3 zur Qualitätskontrolle verwendet werden. Diese Form der Qualitätskontrolle ist auch mit den Vorrichtungen gemäß der ersten bis fünften Ausführungsform möglich.

## Patentansprüche

1. Vorrichtung (1; 1'; 1"; 1"'; 1""; 1""') zur Behandlung von Gegenständen, insbesondere Silizium-Scheiben (2), mit einem Medium (3), umfassend
a) einen Behälter (4; 4"; 4"'; 4""; 4""') zur Aufnahme eines Mediums (3) **dadurch gekennzeichnet, daß**
b) eine zumindest teilweise in dem Behälter (4; 4"; 4"'; 4""; 4""') angeordnete, drehbare Träger-Einrichtung (5; 5" 5"'; 5""; 5""') zur Aufnahme der zu behandelnden Gegenstände und
c) eine in mindestens einem Lager (13, 14; 13" 13"', 14"'; 13"", 14"") gelagerte, mit der Träger-Einrichtung (5; 5" 5"'; 5"") verbundene, drehantreibbare Welle, vorgesehen ist,
d) wobei das mindestens eine Lager (13, 14; 13"; 13"', 14"'; 13"", 14""),
i) ein mit der Welle verbundenes erstes Lager-Teil (22; 22"; 22"') und
ii) ein dem ersten Lager-Teil (22; 22"; 22"') zugeordnetes, ein supraleitendes Material enthaltendes zweites Lager-Teil (24; 24"; 24"'; 24"") aufweist,
iii) wobei das erste Lager-Teil (22; 22"; 22"') gegenüber dem zweiten Lager-Teil (24; 24"; 24"'; 24"") durch magnetische Kräfte beabstandet gehalten ist.

2. Vorrichtung (1) gemäß Anspruch 1, **dadurch gekennzeichnet, daß** das zweite Lager-Teil (24) eine Lager-Halbschale (28) aus einem supraleitenden Material aufweist.

3. Vorrichtung (1) gemäß einem der vorangehenden Ansprüche, **dadurch gekennzeichnet, daß** das erste Lager-Teil (22) permanente Ringmagnete (25) aufweist.

4. Vorrichtung (1) gemäß Anspruch 3, **dadurch gekennzeichnet, daß** jeweils benachbarte Ringmagnete (25) eine entgegengesetzte magnetische Polung aufweisen.

5. Vorrichtung (1") gemäß Anspruch 1, **dadurch gekennzeichnet, daß** das zweite Lager-Teil (24") eine eben ausgebildete Lager-Scheibe (53) aus einem supraleitenden Material aufweist.

6. Vorrichtung (1") gemäß Anspruch 5, **dadurch gekennzeichnet, daß** das erste Lager-Teil (22") konzentrisch zueinander angeordnete permanente Ringmagnete (25") aufweist.

7. Vorrichtung (1; 1'; 1"; 1"'; 1"") gemäß einem der vorangehenden Ansprüche, **dadurch gekennzeichnet, daß** eine Antriebs-Einheit (15; 15'; 15"'; 15"") zum Antrieb der Welle vorgesehen ist.

8. Vorrichtung (1; 1"; 1"'; 1"")gemäß Anspruch 7, **dadurch gekennzeichnet, daß** die Antriebs-Einheit (15; 15"'; 15"") einen die Welle zumindest teilweise umgebenden Spulen-Kern (41) aufweist.

9. Vorrichtung (1') gemäß Anspruch 7, **dadurch gekennzeichnet, daß** die Antriebs-Einheit (15') eine mit der Welle verbundene Hysterese-Scheibe (48) und eine ortsfest angeordnete Spulen-Einheit zur Erzeugung eines mit der Hysterese-Scheibe (48) zum Antrieb der Wel-le wechselwirkenden Magnetfeldes aufweist.

10. Vorrichtung (1; 1'; 1"; 1"'; 1"") gemäß einem der vorangehenden Ansprüche, **dadurch gekennzeichnet, daß** das erste Lager-Teil (22; 22"; 22"') und/oder das zweite Lager-Teil (24; 24": 24"'; 24"") und/oder der Behälter (4; 4"; 4"'; 4"") und/oder die Welle mit einem gegenüber dem Medium (3) beständigen Überzug (16, 27, 35; 52; 27", 35") versehen sind.

11. Vorrichtung (1; 1'; 1"; 1"'; 1"") gemäß einem der vorangehenden Ansprüche, **dadurch gekennzeichnet, daß** das erste Lager-Teil (22; 22"; 22"') aus dem zweiten Lager-Teil (24; 24"; 24"'; 24"") herausziehbar ist.

12. Vorrichtung (1; 1'; 1"; 1"'; 1"") gemäß einem der vorangehenden Ansprüche, **dadurch gekennzeichnet, daß** die Welle mit der Horizontalen einen frei wählbaren Winkel α einschließt, für den gilt: 0° < α ≤ 90°, insbesondere 5° ≤ α ≤ 30°.

13. Vorrichtung (1""') gemäß Anspruch 1, **dadurch gekennzeichnet, daß** die Welle im wesentlichen vertikal verläuft und die Träger-Einrichtung (5""') eine im wesentlichen horizontal verlaufende Träger-Scheibe (18""') aufweist.

14. Vorrichtung (1""') gemäß Anspruch 13, **dadurch gekennzeichnet, daß** die Träger-Scheibe (18'"") als Auflage für einen zu behandelnden Gegenstand dient.

## Claims

1. A device (1; 1'; 1"; 1"'; 1"") for treating objects, in particular silicon wafers (2), with a fluid (3), comprising
a) a container (4; 4"; 4"'; 4"") for accommodation of a fluid (3) **characterized in that**
b) a rotatable carrying arrangement (5; 5"; 5"'; 5""), which is at least partially disposed in the container (4; 4"; 4"'; 4""), serving for accommodation of the objects to be treated and
c) a rotatably drivable shaft, which is run on at least one bearing (13, 14; 13"; 13"', 14"'; 13"", 14"") and joined to the carrying arrangement (5; 5"; 5"'; 5"") is provided,
d) with the at least one bearing (13, 14; 13"; 13"', 14"'; 13"", 14"") including
i) a first bearing member (22; 22"; 22"') joined to the shaft; and
ii) a second bearing member (24; 24"; 24"'; 24"") in vicinity to the first bearing member (22; 22"; 22"'), containing superconductive material;
iii) with the first bearing member (22; 22", 22"') being kept spaced from the second bearing member (24; 24"; 24"'; 24"") by magnetic forces.

2. A device (1) according to claim 1, **characterized in that** the second bearing member (24) comprises a bearing shell (28) of superconductive material.

3. A device (1) according to one of the preceding claims, **characterized in that** the first bearing member (22) has permanent ring magnets (25).

4. A device (1) according to claim 3, **characterized in that** respectively adjacent ring magnets (25) have opposed magnetic poles.

5. A device (1") according to claim 1, **characterized in that** the second bearing member (24") has a plane bearing disk (53) of superconductive material.

6. A device (1") according to claim 5, **characterized in that** the first bearing member (22") comprises permanent ring magnets (25") which are disposed concentrically of each other.

7. A device (1; 1'; 1", 1"'; 1"") according to one of the preceding claims, **characterized in that** a driving unit (15; 15'; 15"'; 15"") is provided for actuation of the shaft.

8. A device (1; 1"; 1"'; 1"") according to claim 7, **characterized in that** the driving unit (15; 15"; 15"") comprises a coil core (41), which encircles the shaft at least partially.

9. A device (1') according to claim 7, **characterized in that** the driving unit (15') includes a hysteresis disk (48), which is joined to the shaft, and a stationary coil unit for the generation of a magnetic field which interacts with the hysteresis disk (48) for actuation of the shaft.

10. A device (1; 1'; 1"; 1"'; 1"") according to one of the preceding claims, **characterized in that** the first bearing member (22; 22"; 22"') and/or the second bearing member (24; 24"; 24"'; 24"") and/or the container (4; 4"; 4"'; 4"") and/or the shaft are provided with a coating (16, 27, 35; 52; 27", 35") that is resistant to the fluid (3).

11. A device (1; 1'; 1"; 1"'; 1"") according to one of the preceding claims, **characterized in that** the first bearing member (22; 22"; 22"') is removable from the second bearing member (24; 24"; 24"'; 24"").

12. A device (1; 1'; 1"; 1"'; 1"") according to one of the preceding claims, **characterized in that** the shaft and a horizontal line make a freely selectable angle α to which applies 0° ≤ *α ≤* 90°, in particular 5° ≤ α ≤30°and by special advantage α ≈ 15°.

13. A device (1""') according to claim 1, **characterized in that** the shaft is substantially vertical and the carrying arrangement (5""') comprises a substantially horizontal support disk (18""').

14. A device (1""') according to claim 13, **characterized in that** the support disk (18""') serves as a support for an object to be treated.

## Revendications

1. Dispositif (1; 1'; 1''; 1'''; 1''''; 1''''') pour le traitement d'objets, en particulier des pastilles de silicium (2), avec un fluide (3) comprenant
a) un récipient (4; 4''; 4'''; 4''''; 4''''') pour réceptionner un fluide (3) **caractérisé en ce que** sont prévus
b) un dispositif porteur (5; 5''; 5'''; 5'''' ; 5""') rotatif, disposé au moins en partie dans le récipient (4; 4''; 4'''; 4''''; 4''''' ) pour réceptionner les objets à traiter et
c) un arbre à entraînement rotatif logé dans au moins un palier (13, 14; 13"; 13"'; 14"'; 13""; 14"") et relié au dispositif porteur (5; 5''; 5'''; 5''''),
d) moyennant quoi au moins un palier (13, 14; 13''; 13'''; 14'''; 13'"''; 14'"'') présente
i) une première partie de palier (22; 22''; 22''') reliée à l'arbre et
ii) une seconde partie de palier (22; 22''; 22''') affectée à la première partie de palier (24; 24''; 24'''; 24'''') et contenant un matériau supraconductif,
iii) moyennant quoi la première partie de palier (22; 22''; 22''') est maintenue à distance par rapport à la seconde partie de palier (24; 24"; 24"'; 24"") par des forces magnétiques.

2. Dispositif (1) selon la revendication 1, **caractérisé en ce que** la seconde partie de palier (24) présente une demi-coque de palier (28) composée d'un matériau supraconductif.

3. Dispositif (1) selon l'une quelconque des revendications précédentes, **caractérisé en ce que** la première partie de palier (22) présente des aimants toriques (25) permanents.

4. Dispositif (1) selon la revendication 3, **caractérisé en ce que** chaque aimant torique (25) voisin présente un pôle magnétique opposé.

5. Dispositif (1'') selon la revendication 1, **caractérisé en ce que** la seconde partie de palier (24'') présente un disque de palier (53) conçu de façon plane composé d'un matériau supraconductif.

6. Dispositif (1'') selon la revendication 5, **caractérisé en ce que** la première partie de palier (22'') présente des aimants toriques (25'') permanents disposés de façon concentrique les uns par rapport aux autres.

7. Dispositif (1; 1'; 1''; 1'''; 1'''') selon l'une quelconque des revendications précédentes, **caractérisé en ce qu'**une unité d'entraînement (15; 15'; 15'''; 15'''') est prévue pour l'entraînement de l'arbre.

8. Dispositif (1; 1''; 1'''; 1'''') selon la revendication 7, **caractérisé en ce que** l'unité d'entraînement (15; 15'''; 15'''') présente un noyau de bobine (41) entourant au moins en partie l'arbre.

9. Dispositif (1') selon la revendication 7, **caractérisé en ce que** l'unité d'entraînement (15') présente un disque à hystérésis (48) relié à l'arbre et une unité de bobine disposée de façon fixe pour produire un champ magnétique en interaction avec le disque à hystérésis (48) pour l'entraînement de l'arbre.

10. Dispositif (1; 1'; 1''; 1'''; 1'''') selon l'une quelconque des revendications précédentes, **caractérisé en ce que** la première partie de palier (22; 22''; 22''') et/ou la seconde partie de palier (24; 24'' ;24''' ;24'''') et/ou le récipient (4; 4''; 4'''; 4'''') et/ou l'arbre sont équipés d'un revêtement (16, 27, 35; 52; 27",35") résistant au fluide (3).

11. Dispositif (1; 1'; 1"; 1"'; 1"") selon l'une quelconque des revendications précédentes, **caractérisé en ce que** la première partie de palier (22; 22''; 22''') peut être extraite de la seconde partie de palier (24; 24''; 24'''; 24'''')

12. Dispositif (1; 1'; 1''; 1'''; 1'''') selon l'une quelconque des revendications précédentes, **caractérisé en ce que** l'arbre comprend avec l'horizontale un angle α choisi librement pour lequel : 0°≤α ≤90°, en particulier 5°≤α ≤30°.

13. Dispositif (1''''') selon la revendication 1, **caractérisé en ce que** l'arbre s'étend essentiellement verticalement et **en ce que** le dispositif porteur (5''''') présente un disque porteur (18''''') s'étendant essentiellement l'horizontalement.

14. Dispositif (1''''') selon la revendication 13, **caractérisé en ce que** le disque porteur (18''''') sert d'appui pour un objet à traiter.
